# FASCICULE DE BREVET EUROPEEN

(11) **EP 3 937 738 B1**
(45) Date de publication et mention de la délivrance du brevet: **05.04.2023**
(21) Numéro de dépôt: 20706540.0
(22) Date de dépôt: 02.03.2020
(51) Int. Cl.: A47J 31/20

(54) **MACHINE DE PREPARATION DE BOISSONS INFUSEES MUNIE D'UN PANIER FILTRE RELEVABLE**
MASCHINE ZUR HERSTELLUNG VON BRÜHGETRÄNKEN MIT AUFHEBBAREM FILTERKORB
MACHINE FOR PREPARING INFUSED BEVERAGES PROVIDED WITH A LIFT-UP FILTER BASKET

(30) Priorité: 11.03.2019 FR 1902471
(43) Date de publication de la demande: 19.01.2022
(73) Titulaire: SEB S.A., 69130 Ecully (FR)
(72) Inventeur: DOS SANTOS, Quentin, 69009 LYON (FR); MORIN, Gilles, 69290 POLLIONNAY (FR)
(74) Mandataire: SEB Développement
(86) Numéro de dépôt international: PCT/EP2020/055475
(87) Numéro de publication internationale: WO 2020/182529

(56) Documents cités:
- WO-A1-2019/046812
- CN-U- 202 698 859
- CN-U- 207 640 188
- DE-A1- 3 530 284
- US-A- 3 595 623

## Description

La présente invention se rapporte au domaine technique général des machines de préparation de boissons infusées ou macérées en partant d'eau et d'un ingrédient, notamment du thé ou du café, plus particulièrement des machines de préparation de boissons macérées en partant d'eau froide.

On connait du document US3654852 une machine de préparation de boissons infusées ou macérées comportant une carafe de réception d'eau et une base de réception. La base de réception comporte un moteur destiné à mettre en rotation autour d'un axe Δ un arbre d'entrainement. La carafe comporte un panier filtre de réception d'un ingrédient à faire infuser ou à faire macérer qui est entrainé en rotation par l'arbre d'entrainement autour de l'axe Δ. Le panier filtre est mobile dans la carafe entre une position d'infusion dans laquelle le panier filtre est immergé dans l'eau et accouplé avec l'arbre d'entrainement et une position d'égouttage dans laquelle le panier filtre est agencé au-dessus du niveau de l'eau. La carafe comporte une ouverture supérieure et un couvercle mobile entre une position fermée dans laquelle le couvercle recouvre l'ouverture supérieure et une position ouverte dans laquelle le couvercle est écarté de l'ouverture supérieure.

Le panier filtre comporte une tige qui s'étend vers le haut pour passer à travers une ouverture ménagée dans le couvercle. Pour faire passer le panier filtre dans la position d'égouttage, l'utilisateur tire la tige vers le haut pour la faire coulisser dans l'ouverture du couvercle.

Cependant, la position d'égouttage du panier filtre n'est pas une position stable. Si l'utilisateur relâche la tige, le panier filtre retombe dans l'eau, vers la position d'infusion. Pour retirer le panier filtre de la carafe, l'utilisateur doit le retirer avec le couvercle.

De plus, le couvercle n'est pas séparable du panier filtre, ce qui est gênant pour la manipulation et le nettoyage du panier filtre.

Le but de la présente invention est de remédier aux inconvénients précités et de proposer une machine de préparation de boissons infusées ou macérées qui présente une ergonomie améliorée et un fonctionnement sûr pour un résultat optimisé.

Un autre but de l'invention est de proposer une machine de préparation de boissons infusées qui soit de conception simple et économique à mettre en oeuvre.

Ces buts sont atteints avec une machine de préparation de boissons infusées ou macérées comportant une carafe de réception d'un liquide et une base de réception, ladite base de réception comportant un moteur destiné à mettre en rotation autour d'un axe Δ un arbre d'entrainement, ladite carafe comportant un panier filtre de réception d'un ingrédient à faire infuser ou à faire macérer qui est entrainé en rotation par l'arbre d'entrainement autour de l'axe Δ, ledit panier filtre étant mobile dans la carafe entre une position d'infusion dans laquelle le panier filtre est immergé dans le liquide et accouplé avec l'arbre d'entrainement et une position d'égouttage dans laquelle le panier filtre est agencé au-dessus du niveau du liquide, la carafe comportant une ouverture supérieure et un couvercle mobile entre une position fermée dans laquelle le couvercle recouvre l'ouverture supérieure et une position ouverte dans laquelle le couvercle est écarté de l'ouverture supérieure caractérisée en ce que le panier filtre est relié au couvercle par un dispositif d'accouplement, de telle manière que le panier filtre soit en position d'infusion lorsque le couvercle est en position fermée et que le panier filtre soit en position d'égouttage lorsque le couvercle est en position ouverte, la position ouverte du couvercle étant une position stable.

Ainsi, le panier filtre est dans une position stable d'égouttage. Une fois l'infusion ou la macération terminée, l'utilisateur peut faire passer le panier filtre de la position d'infusion à la position d'égouttage en manoeuvrant le couvercle de la position fermée à la position ouverte. En conséquence, l'utilisateur ne risque pas de se salir en manipulant le couvercle, qui est une pièce propre, pour amener le panier filtre en position d'égouttage.

De manière avantageuse l'axe Δ est majoritairement vertical, de préférence vertical.

Par majoritairement vertical, on comprend que l'axe Δ forme avec un axe vertical un angle supérieur à 45°.

Avantageusement, le couvercle est agencé sur la carafe de manière rotative autour d'un axe θ.

Une telle construction est particulièrement simple et économique pour rendre le couvercle mobile par rapport à la carafe.

De manière avantageuse, la carafe comporte une poignée, l'axe θ étant agencé à proximité de la poignée.

De préférence, le couvercle comporte une position intermédiaire instable entre la position fermée et la position ouverte qui sont des positions stables, la carafe comportant un moyen de rappel du couvercle en position fermée ou en position ouverte.

Ainsi, le couvercle passe de manière automatique de la position intermédiaire vers la position ouverte pour ouvrir la carafe ou vers la position fermée pour fermer la carafe. Une telle manipulation du couvercle et du panier filtre est particulièrement ergonomique.

De manière avantageuse, le moyen de rappel comporte un ressort. Avantageusement, le dispositif d'accouplement est configuré pour que le panier filtre soit mobile par rapport au couvercle entre la position d'égouttage et une position extraite dans laquelle le panier filtre est séparé du couvercle.

Ainsi, une fois l'ingrédient égoutté, le panier filtre peut être retiré du couvercle pour être vidé et nettoyé, sans risque de laisser s'échapper des gouttes de boisson qui sont susceptibles de générer des salissures.

De préférence, le dispositif d'accouplement comporte un organe coulissant du type tasseau en T qui coopère avec une rainure du type rainure en T.

Avantageusement, la rainure comporte un plan de symétrie vertical, la rainure comportant une extrémité fermée contre laquelle l'organe coulissant est en appui lorsque le panier filtre est en position égouttage et une extrémité ouverte par laquelle l'organe coulissant passe pour amener le panier filtre en position extraite. Ainsi, une fois l'organe coulissant engagé dans l'extrémité ouverte, le panier filtre peut aller dans la position d'égouttage par gravité.

De préférence, l'organe coulissant comporte une tige cylindrique qui se termine par une portion sphérique, la rainure comportant des parois munies d'une portion arrondie destinées à coopérer avec la portion sphérique.

Ainsi, les portions arrondies entrainent la portion sphérique lors de la manipulation du couvercle, pour agir sur le panier filtre.

L'organe coulissant peut tourner dans la rainure lorsque le panier filtre est en position d'infusion et entrainé en rotation, la portion sphérique ne touchant pas les portions arrondies.

Avantageusement, le panier filtre comporte l'organe coulissant et le couvercle comporte la rainure.

De manière avantageuse, le panier filtre comporte un couvercle, l'organe coulissant appartenant au couvercle du panier filtre.

De préférence, le couvercle comporte une paroi inférieure de réception de la rainure et l'axe de rotation θ est perpendiculaire au plan de symétrie vertical de la rainure.

Ainsi, le panier filtre peut être évacué selon une trajectoire orientée vers le haut pour passer de la position d'égouttage vers la position extraite.

Avantageusement, le panier filtre comporte un fond depuis lequel s'étend un conduit tubulaire d'axe Δ qui comprend une extrémité libre fermée et une portion conique de guidage vis-à-vis de l'arbre d'entrainement lorsque le panier filtre passe de la position d'égouttage vers la position d'infusion.

De préférence, la carafe repose sur la base de réception lors de la préparation de la boisson et est retirée de la base de réception notamment pour le service de la boisson ou le nettoyage.

Ainsi, la carafe est agencée de manière amovible par rapport à la base de réception. En conséquence, l'arbre d'entrainement comporte deux parties : une partie dans la base et une partie dans la carafe.

On comprendra mieux les buts, aspects et avantages de la présente invention, d'après la description donnée ci-après d'un mode particulier de réalisation de l'invention présenté à titre d'exemple non limitatif, en se référant aux dessins annexés dans lesquels :
[Fig. 1] la figure 1 est une vue en perspective d'une machine de préparation de boissons infusées ou macérées selon un mode particulier de réalisation de l'invention, la carafe étant posée sur la base de réception et le panier filtre étant en position d'infusion,
[Fig. 2] la figure 2 est une vue en coupe suivant le plan de coupe II de la machine de préparation de boissons illustrée à la figure 1,
[Fig. 3] la figure 3 est une vue en perspective de la machine de préparation de bossons illustrée à la figure 1, le couvercle étant en position ouverte,
[Fig. 4] la figure 4 est une vue en coupe suivant le plan de coupe IV de la machine de préparation de boissons illustrée à la figure 3,
[Fig. 5] la figure 5 est une vue en perspective du dessous du panier filtre de la machine de préparation de boissons illustrée à la figure 1,
[Fig. 6] la figure 6 est une vue en perspective du dessous de la carafe de la machine de préparation de boissons illustrée à la figure 1,
[Fig. 7] la figure 7 est une vue en perspective du dessus de la base de réception de la machine de préparation de boissons illustrée à la figure 1,
[Fig. 8] la figure 8 est une vue en perspective du dessus de la carafe de la machine de préparation de boissons illustrée à la figure 1, la carafe comportant le sous-ensemble formé par le filtre et la pluralité de cavités,

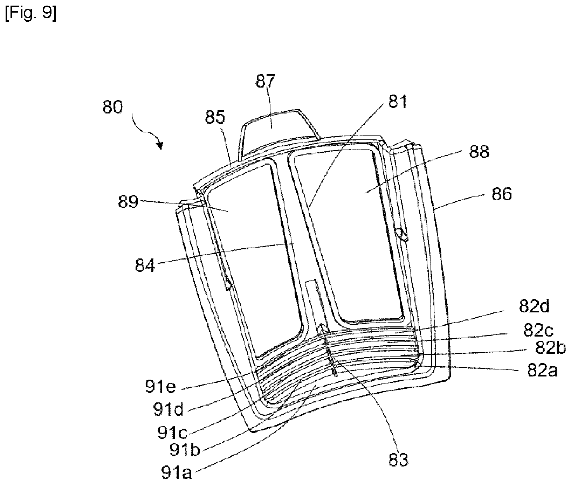

[Fig. 9] la figure 9 est une vue en perspective du dessus du sous-ensemble formé par le filtre et la pluralité de cavités de la carafe illustrée à la figure 8.

On notera que, dans ce document, les termes «horizontal», «vertical», «inférieur», «supérieur», «longitudinal», «transversal», «haut», «bas», employés pour décrire la machine de préparation de boisson, font référence à cette machine de préparation de boissons en situation d'usage, lorsqu'elle est posée sur un plan horizontal.

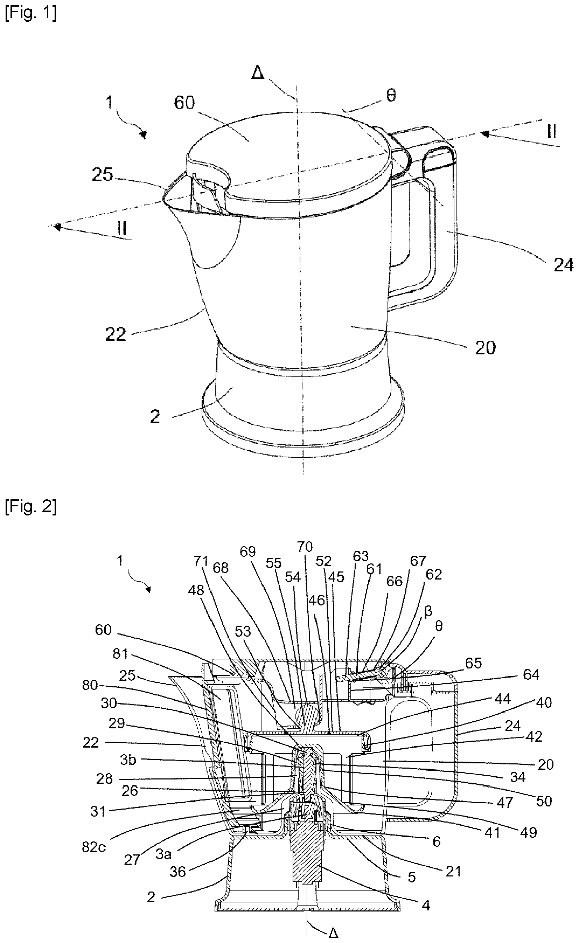

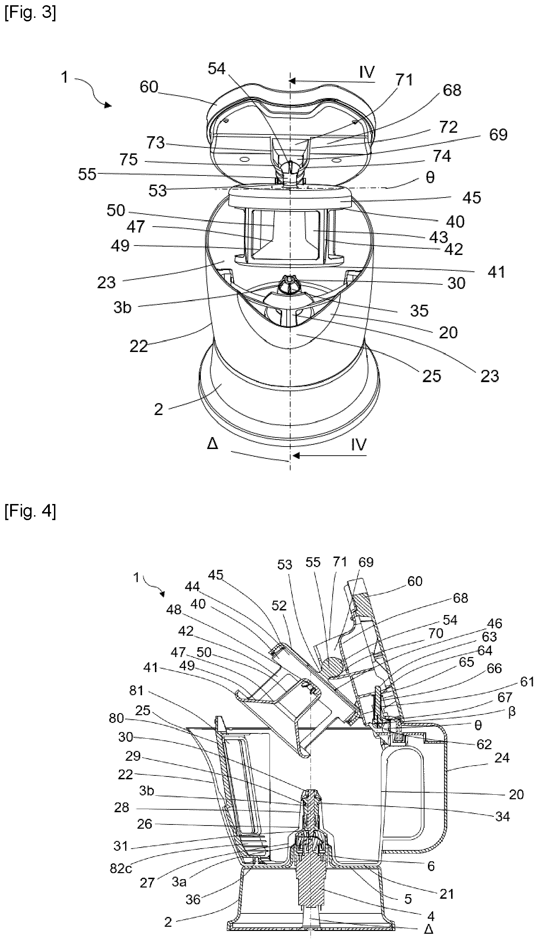

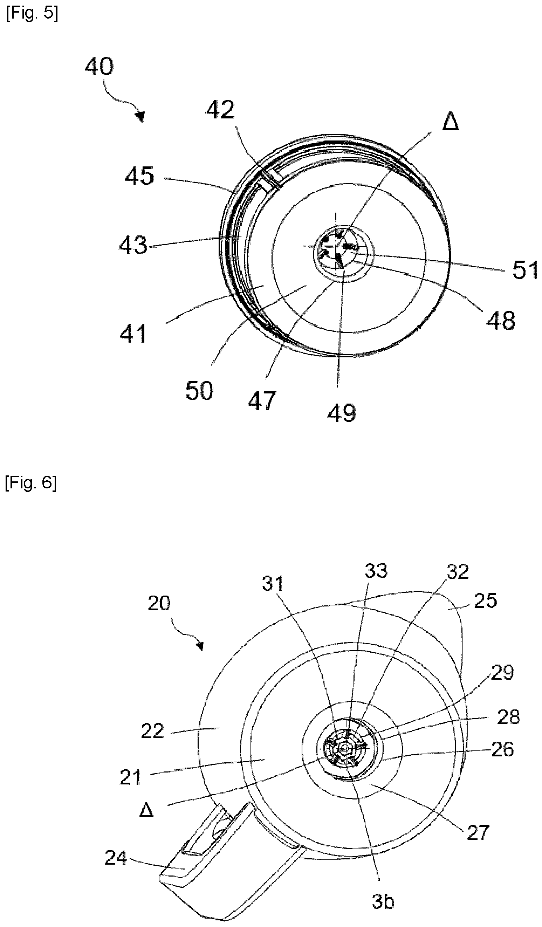

Tel que visible aux figures 1 à 7, une machine de préparation de boissons 1 comporte une base de réception 2, une carafe 20 munie d'un couvercle 60 et un panier filtre 40. Le panier filtre 40 est destiné à recevoir un ingrédient à faire infuser dans de l'eau chaude préalablement disposée dans la carafe 20 ou un ingrédient à faire macérer dans de l'eau froide, notamment du café. Le panier filtre 40 est agencé de manière rotative dans la carafe 20 et mis en rotation par un arbre d'entrainement 3a, 3b (Fig.2 et 4).

La carafe 20 repose sur la base de réception 2 lors de la préparation de la boisson et est retirée de la base de réception 2 notamment pour le service de la boisson ou le nettoyage. La base de réception 2 comporte un moteur 4 destiné à mettre en rotation l'arbre d'entrainement 3a, 3b qui est mobile autour d'un axe Δ vertical. Ainsi l'arbre d'entrainement comporte un arbre d'entrainement 3a agencé dans la base de réception 2 et un arbre d'entrainement 3b agencé dans la carafe 20.

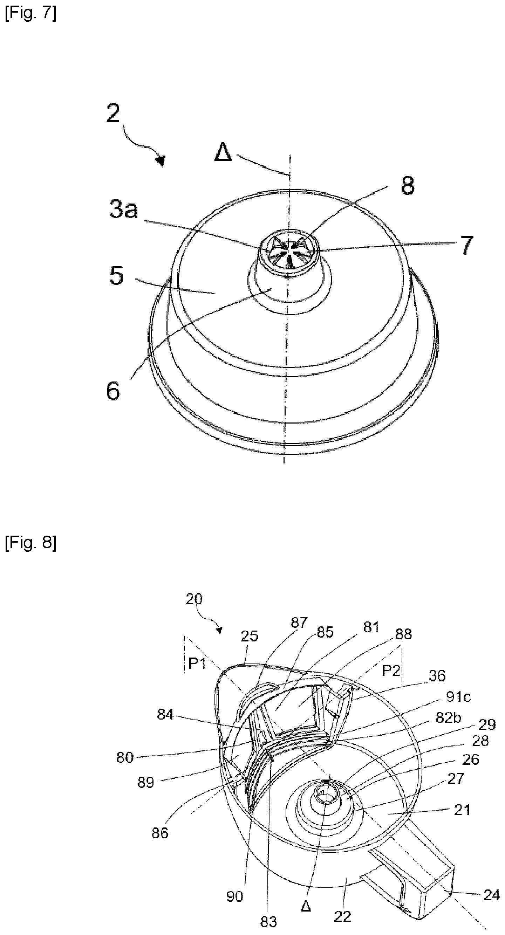

La base de réception 2 comprend une paroi supérieure 5 (fig. 7) munie d'une cheminée 6 centrale dans laquelle est logé l'arbre d'entrainement 3a qui se termine par un élément d'entrainement 7 muni de dents 8. L'arbre d'entrainement 3a agencé dans la base de réception 2 est destiné à entrainer l'arbre d'entrainement 3b agencé dans la carafe 20 ainsi que le panier filtre 40 en rotation autour de l'axe Δ. Le panier filtre 40 est également mobile dans la carafe 20 entre une position d'infusion dans laquelle le panier filtre 40 est immergé dans l'eau et accouplé avec l'arbre d'entrainement 3a, 3b et une position extraite d'égouttage dans laquelle le panier filtre 40 est agencé au-dessus du niveau de l'eau.

La carafe 20 comporte un fond 21 et une paroi latérale 22 sensiblement cylindrique dont l'extrémité libre délimite une ouverture supérieure 23 (Fig.3 et 4). La carafe 20 comporte une poignée 24 et un bec verseur 25 agencé de manière diamétralement opposée à la poignée 24. La carafe 20 est configurée pour recevoir le panier filtre 40 qui est agencé dans celle-ci de manière rotative lors de la préparation de la boisson.

La carafe 20 comporte une excroissance 26 d'axe Δ qui s'étend depuis le fond 21. L'excroissance 26 comporte une portion inférieure 27 de diamètre D1 suivie d'une portion supérieure 28 de diamètre D2, D1 étant supérieur à D2. La portion inférieure 27 forme un logement destiné à coopérer avec la cheminée 6 de la base de réception 2. L'arbre d'entrainement 3b agencé dans la carafe 20 est disposé dans la portion supérieure 28. La portion supérieure 28 comporte une extrémité libre 29 ouverte qui est coiffée par une extrémité supérieure 30 de l'arbre d'entrainement 3b agencé dans la carafe 20. L'arbre d'entrainement 3b agencé dans la carafe 20 comporte une extrémité inférieure 31 formant une cavité 32 destinée à coopérer avec l'élément d'entrainement 7 de l'arbre d'entrainement 3a agencé dans la base de réception 2 lorsque la carafe 20 repose sur la base de réception 2. La cavité 32 comporte des dents 33 qui coopèrent avec les dents 8 de l'élément d'entrainement 7 pour transmettre la rotation du moteur 4 à l'arbre d'entrainement 3b agencé dans la carafe 20. Un joint d'étanchéité 34 est agencé entre l'arbre d'entrainement 3b agencé dans la carafe 20 et la portion supérieure 28.

Le panier filtre 40 comporte un fond 41 et une paroi latérale 42 munie d'ouvertures 43. Un tamis à mailles fines (non représenté sur les figures) recouvre les ouvertures 43. La paroi latérale 42 est sensiblement cylindrique et son extrémité libre délimite une ouverture supérieure 44. Le panier filtre 40 comporte un couvercle 45 qui est destiné à être rapporté sur l'extrémité libre de la paroi latérale 42 par vissage pour fermer l'ouverture supérieure 44. Le couvercle 45 comporte des perforations 46 pour permettre l'échappement de l'air emprisonné sous le couvercle 45.

Le panier filtre 40 comporte un conduit tubulaire 47 d'axe Δ qui s'étend depuis le fond 41 et qui qui comprend une extrémité libre fermée 48. Le conduit tubulaire 47 comporte une portion conique 49 et une portion sensiblement cylindrique 50. L'extrémité libre fermée 48 est destinée à coopérer avec l'extrémité supérieure 30 de l'arbre d'entrainement 3b agencé dans la carafe 20. La portion sensiblement cylindrique 50 coopère avec la portion supérieure 28 de l'excroissance 26 de la carafe 20 pour guider en rotation le panier filtre 40 autour de l'axe Δ. L'extrémité supérieure 30 de l'arbre d'entrainement 3b agencé dans la carafe 20 comporte des protubérances 35 qui coopèrent avec des logements 51 de formes complémentaires (Fig.4) aménagés dans l'extrémité libre fermée 48 du conduit tubulaire 47 pour entrainer en rotation le panier filtre 40. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Le couvercle 45 du panier filtre 40 comporte une paroi supérieure 52 et une tige cylindrique 53. La tige cylindrique 53 s'étend le long de l'axe Δ, depuis la paroi supérieure 52 et se termine par une portion sphérique 54.

Le couvercle 60 de la carafe 20 est mobile en rotation autour d'un axe θ, perpendiculaire à l'axe Δ, entre une position fermée (Fig.1 et 2) dans laquelle le couvercle 60 recouvre l'ouverture supérieure 23 et une position ouverte (Fig.3 et 4) dans laquelle le couvercle 60 est écarté de l'ouverture supérieure 23 de la carafe 20. Le couvercle 60 comporte une position intermédiaire instable entre la position fermée et la position ouverte qui sont des positions stables. La carafe 20 comporte un moyen de rappel du couvercle 60 en position fermée ou en position ouverte (Fig.2 et 4). Le moyen de rappel comporte une tige cylindrique 61 dont une extrémité 62 est articulée en rotation autour d'un axe β parallèle à l'axe θ et décalé de l'axe θ vers le centre et le haut de la carafe 20. La tige cylindrique 61 comporte une extrémité libre 63 qui est agencée de manière coulissante dans une ouverture traversante 65 aménagée dans une paroi 64 du couvercle 60. Le moyen de rappel comporte également un ressort 66 de compression qui est agencé autour de la tige cylindrique 61. Le ressort 66 prend appui à une première extrémité sur une butée 67 agencée sur la tige cylindrique 61 et proche de l'axe β. Le ressort 66 prend appui à une deuxième extrémité sur la paroi 64. L'axe β étant décalé de l'axe θ vers le centre et le haut de la carafe 20, le ressort 66 tend à rappeler le couvercle 60 dans la position stable la plus proche à partir de la position intermédiaire instable.

Le couvercle 60 comporte une paroi inférieure 68 qui est destinée à coopérer avec la portion sphérique 54 lorsque le couvercle est en position fermée (Fig.2). La portion sphérique 54 et la paroi inférieure 68 du couvercle 60 forment un contact ponctuel sphère/plan lorsque le panier filtre 40 est en position d'infusion et le couvercle 60 en position fermée. La portion sphérique 54 et la paroi inférieure 68 forment ainsi un dispositif de butée supérieur qui empêche le panier filtre 40 de se déplacer vers le haut, le long de l'axe Δ.

Le panier filtre 40 est mobile le long de l'axe Δ avec un jeu réduit de quelques millimètres, notamment inférieur à un millimètre entre une position basse et une position haute. Quelle que soit sa position le long de l'axe Δ, le panier filtre 40 est entrainé en rotation par l'arbre d'entrainement 3a, 3b. Dans sa position d'infusion, le panier filtre 40 est maintenu entre la position basse dans laquelle l'extrémité libre fermée 48 du panier filtre 40 est en butée sur l'extrémité supérieure 30 de l'arbre d'entrainement 3b agencé dans la carafe 20 et la position haute dans laquelle la portion sphérique 54 est en butée sur la paroi inférieure 68.

Le panier filtre 40 s'étend le long de l'axe Δ sur une hauteur H. L'excroissance 26 de forme complémentaire au conduit tubulaire 47 s'étend depuis le fond 21 de la carafe 20 sur plus de la moitié de la hauteur H du panier filtre 40.

La tige cylindrique 53 et la portion sphérique 54 du panier filtre 40 forment un organe coulissant 55 du type tasseau en T et le couvercle 60 comporte une rainure 69 du type rainure en T agencée sur la paroi inférieure 68. L'organe coulissant 55 du type tasseau en T et la rainure 69 du type rainure en T forment un dispositif d'accouplement du panier filtre 40 sur le couvercle 60 qui permet de faire passer le panier filtre 40 de la position d'infusion lorsque le couvercle 60 est en position fermée à la position d'égouttage lorsque le couvercle 60 est en position ouverte.

La rainure 69 comporte un plan de symétrie vertical passant par l'axe Δ et perpendiculaire à l'axe θ. La rainure 69 comporte une extrémité fermée 70 contre laquelle l'organe coulissant 55 est en appui lorsque le panier filtre 40 est en position d'égouttage et une extrémité ouverte 71 par laquelle l'organe coulissant 55 peut passer. Ainsi, le panier filtre 40 est mobile par rapport au couvercle 60 entre la position d'égouttage dans laquelle l'organe coulissant 55 est en appui sur l'extrémité fermée 70 et une position extraite dans laquelle l'organe coulissant 55 est sorti de la rainure 69 par l'extrémité ouverte 71. La rainure 69 comporte des parois 72, 73 munies chacune d'une portion arrondie 74, 75 d'extrémité qui coopèrent avec la portion sphérique 54 lors de la manipulation du couvercle 60, pour agir sur le panier filtre 40, notamment pour l'amener dans la position d'égouttage.

Conformément aux figures 7 et 8, la carafe 20 comporte un sous-ensemble 80 formé par un filtre 81 et une pluralité de cavités 82a, 82b, 82c, 82d. La pluralité de cavités 82a, 82b, 82c, 82d est agencée dans une portion incurvée inférieure 83 du sous-ensemble 80. La portion incurvée inférieure 83 s'étend depuis le fond 21 vers le haut et de manière sensiblement parallèle à la paroi latérale 22. Le filtre 81 est agencé dans une portion incurvée supérieure 84 du sous-ensemble 80. La portion incurvée supérieure 84 s'étend depuis la portion incurvée inférieure 83 vers le haut, devant le bec verseur 25 jusqu'à une extrémité libre 85 alignée avec l'ouverture supérieure 23 de la carafe 20. Le sous-ensemble 80 est agencé de manière amovible dans la carafe 20. La carafe 20 comporte une nervure 36 et le sous-ensemble 80 comporte un cadre périphérique 86. Le cadre périphérique 86 est destiné à coopérer avec la nervure 36 pour maintenir le sous-ensemble 80 dans la carafe 20. L'extrémité libre 85 comporte une excroissance de matière 87 qui forme une zone de préhension du sous-ensemble 80.

Le bec verseur 25 et le sous-ensemble 80 comportent un même plan de symétrie P1 qui passe par la poignée 24. Le filtre 81 comporte deux tamis 88, 89 présentant chacun une maille définissant des orifices de passage compris entre 30 et 50 micromètres (non représentés sur les figures). Les deux tamis 88, 89 sont agencés de part et d'autre du plan de symétrie P1. Le cadre périphérique 86 et la nervure 36 s'étendent dans un plan P2 sensiblement perpendiculaire au plan de symétrie P1. Le sous-ensemble 80 présente une forme projetée sur le plan P2 trapézoïdale.

La portion incurvée inférieure 83 comporte une paroi de fond 90 parallèle à la paroi latérale 22 de la carafe 20, depuis laquelle s'étendent parallèlement au fond 21 une succession de parois incurvées 91a, 91b, 91c, 91d, 91e qui définissent la pluralité de cavités 82a, 82b, 82c, 82d. Ainsi, chaque cavité 82a, 82b, 82c, 82d présente une ouverture en arc de cercle, orientée vers l'intérieur de la carafe 20. Dans une section transversale parallèle au fond 21, la paroi latérale 22 de la carafe 20 comporte une périphérie P et la portion incurvée inférieure 83 s'étend sur au moins 10% de la périphérie P.

En fonctionnement, l'utilisateur positionne la carafe 20 sur la base de réception 2, déplace le couvercle 60 dans la position ouverte pour amener le panier filtre 40 dans la position d'égouttage. Il saisit le panier filtre 40 et le déplace vers le haut. L'organe coulissant 55 formé par la tige cylindrique 53 et la portion sphérique 54 est déplacé pour sortir de la rainure 69 et ainsi le panier filtre 40 est désolidarisé du couvercle 60, en position extraite. L'utilisateur met alors de l'eau dans la carafe 20 et rempli le panier filtre 40 avec un ingrédient à faire infuser ou à faire macérer, par exemple du café. Il positionne ensuite le panier filtre 40 sur le couvercle 60 en glissant l'organe coulissant 55 dans la rainure 69 pour l'amener dans la position d'égouttage. Il bascule ensuite le couvercle 60 dans la position fermée pour amener le panier filtre 40 dans la position d'infusion dans la carafe. L'utilisateur lance alors un cycle de préparation de boisson. Le moteur 4 est activé et l'arbre d'entrainement 3a agencé dans la base de réception 2 entraine en rotation l'arbre d'entrainement 3b agencé dans la carafe 20 ainsi que le panier filtre 40. L'ingrédient à faire infuser ou à faire macérer n'étant pas encore imprégné par l'eau, le panier filtre 40 flotte dans l'eau et la portion sphérique 54 vient en appui sur la paroi inférieure 68 pour former un dispositif de butée supérieur qui empêche le panier filtre 40 de se déplacer vers le haut, le long de l'axe Δ. Lorsque l'ingrédient à faire infuser ou à faire macérer est suffisamment imprégné par l'eau, le panier filtre 40 se déplace le long de l'axe Δ vers le fond 21 de la carafe 20. L'extrémité libre fermée 48 du panier filtre 40 repose sur l'extrémité supérieure 30 de l'arbre d'entrainement 3b agencé dans la carafe 20. L'extrémité libre fermée 48 et l'extrémité supérieure 30 forment un dispositif de butée inférieur qui empêche le panier filtre 40 de se déplacer vers le bas, le long de l'axe Δ.

Une fois la boisson préparée, l'utilisateur déplace le couvercle 60 dans la position ouverte pour amener le panier filtre 40 dans la position d'égouttage. Après quelques minutes, l'eau contenue dans le panier filtre 40 s'est égouttée et l'utilisateur peut retirer le panier filtre 40 puis refermer le couvercle 60. L'utilisateur peut alors saisir la poignée 24 de la carafe 20 pour servir la boisson. La boisson passe à travers les tamis 88, 89 du filtre 81 vers le bec verseur 25 pour retenir des particules fines d'ingrédient et, en fin de versage, des particules lourdes qui se sont déposées sur le fond 21 sont entrainées vers la pluralité de cavités 82a, 82b, 82c, 82d, puis sous l'effet de la gravité tombent dans ces cavités 82a, 82b, 82c, 82d. Les particules lourdes qui ne sont pas piégées dans les cavités 82a, 82b, 82c, 82d sont retenues par les tamis 88, 89 du filtre 81. Bien entendu, l'invention n'est nullement limitée aux modes de réalisation décrits et illustrés qui n'ont été donnés qu'à titre d'exemple. Des modifications restent possibles, notamment du point de vue de la constitution des divers éléments ou par substitution d'équivalents techniques, sans sortir pour autant du domaine de protection de l'invention.

Dans une variante de réalisation, le couvercle 60 est agencé sur la carafe 20 de manière mobile en translation. Le couvercle 60 comporte un dispositif de maintien en position ouverte.

## Revendications

1. Machine de préparation de boissons (1) infusées ou macérées comportant une carafe (20) de réception d'un liquide et une base de réception (2), ladite base de réception (2) comportant un moteur (4) destiné à mettre en rotation autour d'un axe Δ un arbre d'entrainement (3a, 3b), ladite carafe (20) comportant un panier filtre (40) de réception d'un ingrédient à faire infuser ou à faire macérer, qui est entrainé en rotation par l'arbre d'entrainement (3a, 3b) autour de l'axe Δ, ledit panier filtre (40) étant mobile dans la carafe (20) entre une position d'infusion dans laquelle le panier filtre (40) est immergé dans le liquide et accouplé avec l'arbre d'entrainement (3a, 3b) et une position d'égouttage dans laquelle le panier filtre (40) est agencé au-dessus du niveau du liquide, la carafe (20) comportant une ouverture supérieure (23) et un couvercle (60) mobile entre une position fermée dans laquelle le couvercle (60) recouvre l'ouverture supérieure (23) et une position ouverte dans laquelle le couvercle (60) est écarté de l'ouverture supérieure (23), **caractérisée en ce que** le panier filtre (40) est relié au couvercle (60) par un dispositif d'accouplement (55, 69), de telle manière que le panier filtre (40) soit en position d'infusion lorsque le couvercle (60) est en position fermée et que le panier filtre (40) soit en position d'égouttage lorsque le couvercle (60) est en position ouverte, la position ouverte du couvercle (60) étant une position stable.

2. Machine de préparation de boisson (1) selon la revendication 1, **caractérisée en ce que** le couvercle (60) est agencé sur la carafe (20) de manière rotative autour d'un axe θ.

3. Machine de préparation de boisson (1) selon la revendication 2, **caractérisée en ce que** le couvercle (60) comporte une position intermédiaire instable entre la position fermée et la position ouverte qui sont des positions stables, la carafe (20) comportant un moyen de rappel (61, 66) du couvercle (60) en position fermée ou en position ouverte.

4. Machine de préparation de boissons (1) selon l'une quelconque des revendications 1 à 3, **caractérisée en ce que** le dispositif d'accouplement (55, 69) est configuré pour que le panier filtre soit mobile par rapport au couvercle (60) entre la position d'égouttage et une position extraite dans laquelle le panier filtre (40) est séparé du couvercle (60).

5. Machine de préparation de boissons (1) selon la revendication 4, **caractérisée en ce que** le dispositif d'accouplement comporte un organe coulissant (55) du type tasseau en T qui coopère avec une rainure (69) du type rainure en T.

6. Machine de préparation de boissons (1) selon la revendication 5, **caractérisée en ce que** la rainure (69) comporte un plan de symétrie vertical, la rainure (69) comportant une extrémité fermée (70) contre laquelle l'organe coulissant (55) est en appui lorsque le panier filtre (40) est en position égouttage et une extrémité ouverte (71) par laquelle l'organe coulissant (55) passe pour amener le panier filtre (40) en position extraite.

7. Machine de préparation de boissons (1) selon l'une quelconque des revendications 5 à 6, **caractérisée en ce que** l'organe coulissant (55) comporte une tige cylindrique (53) qui se termine par une portion sphérique (54), la rainure (69) comportant des parois (72, 73) munies d'une portion arrondie (74, 75) destinées à coopérer avec la portion sphérique (54).

8. Machine de préparation de boissons (1) selon l'une quelconque des revendications 5 à 7, **caractérisée en ce que** le panier filtre (40) comporte l'organe coulissant (55) et **en ce que** le couvercle (60) comporte la rainure (69).

9. Machine de préparation de boissons (1) selon la revendication 8, **caractérisée en ce que** le panier filtre (40) comporte un couvercle (45), l'organe coulissant (55) appartenant au couvercle (45) du panier filtre (40).

10. Machine de préparation de boissons (1) selon la revendication 9, **caractérisée en ce que** le couvercle (60) comporte une paroi inférieure (68) de réception de la rainure (69) et **en ce que** l'axe de rotation θ est perpendiculaire au plan de symétrie vertical de la rainure (69).

11. Machine de préparation de boissons (1) selon l'une quelconque des revendications 1 à 10, **caractérisée en ce que** le panier filtre (40) comporte un fond (41) depuis lequel s'étend un conduit tubulaire (47) d'axe Δ qui comprend une extrémité libre fermée (48) et une portion conique (49) de guidage vis-à-vis de l'arbre d'entrainement (3a, 3b) lorsque le panier filtre (40) passe de la position d'égouttage vers la position d'infusion.

12. Machine de préparation de boissons (1) selon l'une quelconque des revendications 1 à 10, **caractérisée en ce que** la carafe (20) repose sur la base de réception (2) lors de la préparation de la boisson et est retirée de la base de réception (2) notamment pour le service de la boisson ou le nettoyage.

## Patentansprüche

1. Maschine zur Zubereitung von Aufguss- oder Brühgetränken (1), die eine Kanne (20) zum Aufnehmen einer Flüssigkeit und eine Aufnahmebasis (2) umfasst, wobei die Aufnahmebasis (2) einen Motor (4) umfasst, der dazu bestimmt ist, eine Antriebswelle (3a, 3b) um eine Achse Δ in Drehung zu versetzen, wobei die Kanne (20) einen Filterkorb (40) zum Aufnehmen einer Zutat, die aufgegossen oder aufgebrüht werden soll, umfasst, der von der Antriebswelle (3a, 3b) um die Achse Δ drehend angetrieben wird, wobei der Filterkorb (40) in der Kanne (20) zwischen einer Aufgussstellung, in der der Filterkorb (40) in die Flüssigkeit getaucht und mit der Antriebswelle (3a, 3b) gekoppelt ist, und einer Abtropfstellung, in der der Filterkorb (40) oberhalb des Füllstands der Flüssigkeit angeordnet ist, beweglich ist, wobei die Kanne (20) eine obere Öffnung (23) und einen Deckel (60) umfasst, der zwischen einer geschlossenen Stellung, in der der Deckel (60) die obere Öffnung (23) bedeckt, und einer offenen Stellung, in der der Deckel (60) von der oberen Öffnung (23) beabstandet ist, beweglich ist, **dadurch gekennzeichnet, dass** der Filterkorb (40) über eine Kopplungsvorrichtung (55, 69) so mit dem Deckel (60) verbunden ist, dass sich der Filterkorb (40) in Aufgussstellung befindet, wenn sich der Deckel (60) in geschlossener Stellung befindet, und dass sich der Filterkorb (40) in Abtropfstellung befindet, wenn sich der Deckel (60) in offener Stellung befindet, wobei es sich bei der offenen Stellung des Deckels (60) um eine stabile Stellung handelt.

2. Getränkezubereitungsmaschine (1) nach Anspruch 1, **dadurch gekennzeichnet, dass** der Deckel (60) um eine Achse θ drehbar auf der Kanne (20) angeordnet ist.

3. Getränkezubereitungsmaschine (1) nach Anspruch 2, **dadurch gekennzeichnet, dass** der Deckel (60) eine instabile Zwischenstellung zwischen der geschlossenen Stellung und der offenen Stellung, bei denen es sich um stabile Stellungen handelt, umfasst, wobei die Kanne (20) ein Mittel zum Rückstellen (61, 66) des Deckels (60) in die geschlossene Stellung oder in die offene Stellung umfasst.

4. Getränkezubereitungsmaschine (1) nach einem der Ansprüche 1 bis 3, **dadurch gekennzeichnet, dass** die Kopplungsvorrichtung (55, 69) so ausgelegt ist, dass der Filterkorb im Verhältnis zum Deckel (60) zwischen der Abtropfstellung und einer herausgezogenen Stellung, in der der Filterkorb (40) vom Deckel (60) getrennt ist, beweglich ist.

5. Getränkezubereitungsmaschine (1) nach Anspruch 4, **dadurch gekennzeichnet, dass** die Kopplungsvorrichtung ein Gleitstück (55) vom Typ einer T-Leiste umfasst, das mit einer Nut (69) vom Typ einer T-Nut zusammenwirkt.

6. Getränkezubereitungsmaschine (1) nach Anspruch 5, **dadurch gekennzeichnet, dass** die Nut (69) eine vertikale Symmetrieebene umfasst, wobei die Nut (69) ein geschlossenes Ende (70), an dem das Gleitstück (55) anliegt, wenn sich der Filterkorb (40) in Abtropfstellung befindet, und ein offenes Ende (71) umfasst, durch das das Gleitstück (55) tritt, um den Filterkorb (40) in die herausgezogene Stellung zu bringen.

7. Getränkezubereitungsmaschine (1) nach einem der Ansprüche 5 bis 6, **dadurch gekennzeichnet, dass** das Gleitstück (55) einen zylindrischen Schaft (53) umfasst, der mit einem kugelförmigen Abschnitt (54) endet, wobei die Nut (69) mit einem gerundeten Abschnitt (74, 75) versehene Wände (72, 73) umfasst, die dazu bestimmt sind, mit dem kugelförmigen Abschnitt (54) zusammenzuwirken.

8. Getränkezubereitungsmaschine (1) nach einem der Ansprüche 5 bis 7, **dadurch gekennzeichnet, dass** der Filterkorb (40) das Gleitstück (55) umfasst, und dadurch, dass der Deckel (60) die Nut (69) umfasst.

9. Getränkezubereitungsmaschine (1) nach Anspruch 8, **dadurch gekennzeichnet, dass** der Filterkorb (40) einen Deckel (45) umfasst, wobei das Gleitstück (55) zum Deckel (45) des Filterkorbs (40) gehört.

10. Getränkezubereitungsmaschine (1) nach Anspruch 9, **dadurch gekennzeichnet, dass** der Deckel (60) eine untere Wand (68) zum Aufnehmen der Nut (69) umfasst, und dadurch, dass die Drehachse θ zur vertikalen Symmetrieebene der Nut (69) senkrecht steht.

11. Getränkezubereitungsmaschine (1) nach einem der Ansprüche 1 bis 10, **dadurch gekennzeichnet, dass** der Filterkorb (40) einen Boden (41) umfasst, ab dem sich eine rohrförmige Leitung (47) mit einer Achse Δ erstreckt, die ein geschlossenes freies Ende (48) und einen kegelförmigen Abschnitt (49) zur Führung gegenüber der Antriebswelle (3a, 3b), wenn der Filterkorb (40) von der Abtropfstellung in die Aufgussstellung übergeht, umfasst.

12. Getränkezubereitungsmaschine (1) nach einem der Ansprüche 1 bis 10, **dadurch gekennzeichnet, dass** die Kanne (20) bei der Zubereitung des Getränks auf der Aufnahmebasis (2) ruht, und insbesondere zum Servieren des Getränks oder zum Reinigen von der Aufnahmebasis (2) abgenommen wird.

## Claims

1. Machine (1) for preparing infused or macerated beverages comprising a decanter (20) for receiving a liquid and a receiving base (2), said receiving base (2) comprising a motor (4) intended to rotate a drive shaft (3a, 3b) about an axis Δ, said decanter (20) comprising a filter basket (40) for receiving an ingredient to be infused or macerated, which is rotated by the drive shaft (3a, 3b) about the Δ axis, said filter basket (40) being movable in the decanter (20) between an infusion position in which the filter basket (40) is immersed in the liquid and coupled with the drive shaft (3a, 3b) and a draining position in which the filter basket (40) is arranged above the level of the liquid, the decanter (20) comprising an upper opening (23) and a cover (60) movable between a closed position in which the cover (60) covers the upper opening (23) and an open position in which the cover (60) is separated from the upper opening (23), **characterised in that** the filter basket (40) is connected to the cover (60) by a coupling device (55, 69), in such a way that the filter basket (40) is in the brewing position when the cover (60) is into the closed position and the filter basket (40) is in the drip position when the cover (60) is in the open position, the open position of the cover (60) being a stable position.

2. Machine (1) for preparing beverages according to claim 1, **characterised in that** the cover (60) is arranged on the decanter (20) rotatably about an axis θ.

3. Machine (1) for preparing beverages according to claim 2, **characterised in that** the cover (60) comprises an unstable intermediate position between the closed position and the open position which are stable positions, the decanter (20) comprising a means (61, 66) for returning the cover (60) into the closed position or into the open position.

4. Machine (1) for preparing beverages according to any one of claims 1 to 3, **characterised in that** the coupling device (55, 69) is configured so that the filter basket is movable with respect to the cover (60) between the draining position and an extracted position in which the filter basket (40) is separated from the cover (60).

5. Machine (1) for preparing beverages according to claim 4, **characterised in that** the coupling device comprises a sliding member (55) of the T-cleat type which cooperates with a groove (69) of the T-slot type.

6. Machine (1) for preparing beverages according to claim 5, **characterised in that** the groove (69) comprises a vertical plane of symmetry, the groove (69) comprising a closed end (70) against which the sliding member (55) rests when the filter basket (40) is in the draining position and an open end (71) through which the sliding member (55) passes to bring the filter basket (40) into the extracted position.

7. Machine (1) for preparing beverages according to any one of claims 5 to 6, **characterised in that** the sliding member (55) comprises a cylindrical rod (53) which ends in a spherical portion (54), the groove (69) comprising walls (72, 73) provided with a rounded portion (74, 75) intended to cooperate with the spherical portion (54).

8. Machine (1) for preparing beverages according to any one of claims 5 to 7, **characterised in that** the filter basket (40) comprises the sliding member (55) and **in that** the cover (60) comprises the groove (69).

9. Machine (1) for preparing beverages according to claim 8, **characterised in that** the filter basket (40) comprises a cover (45), the sliding member (55) belonging to the cover (45) of the filter basket (40).

10. Machine (1) for preparing beverages according to claim 9, **characterised in that** the cover (60) comprises a lower wall (68) for receiving the groove (69) and **in that** the axis of rotation θ is perpendicular to the vertical plane of symmetry of the groove (69).

11. Machine (1) for preparing beverages according to any one of claims 1 to 10, **characterised in that** the filter basket (40) comprises a bottom (41) from which extends a tubular conduit (47) with the axis Δ which comprises a closed free end (48) and a conical portion (49) for guiding with regard to the drive shaft (3a, 3b) when the filter basket (40) passes from the draining position to the brewing position.

12. Machine (1) for preparing beverages according to any one of claims 1 to 10, **characterised in that** the decanter (20) rests on the receiving base (2) during the preparation of the beverage and is removed from the receiving base (2), in particular for serving the beverage or cleaning.
